# FASCICULE DE BREVET EUROPEEN

(11) **EP 2 079 985 B1**
(45) Date de publication et mention de la délivrance du brevet: **23.02.2011**
(21) Numéro de dépôt: 07858603.9
(22) Date de dépôt: 17.10.2007
(51) Int. Cl.: G01C 21/26

(54) **Procédé et dispositif d'assistance au depassement d'un véhicule**
Hilfsverfahren und -Vorrichtung zum überholen eines Fahrzeuges
Method and device for assisting the overtaking of a vehicle

(30) Priorité: 17.10.2006 FR 0609095
(43) Date de publication de la demande: 22.07.2009
(73) Titulaire: Renault SAS, 92100 Boulogne Billancourt (FR)
(72) Inventeur: SACLIER, Nils, 78490 Grosrouvre (FR); FREY, Nicolas, 91940 Gohetz-le-chatel (FR)
(86) Numéro de dépôt international: PCT/FR2007/052177
(87) Numéro de publication internationale: WO 2008/047047

(56) Documents cités:
- EP-A- 1 457 947
- EP-A- 1 586 860
- EP-A- 1 591 754
- DE-A- 10 207 488
- FR-A- 2 847 703

## Description

L'invention concerne un procédé d'assistance à la conduite d'un véhicule.

L'invention concerne plus précisément un procédé d'assistance à la conduite d'un véhicule pour la gestion des dépassements.

L'invention concerne également un dispositif pour mettre en oeuvre un tel procédé, ainsi qu'un véhicule muni d'un tel dispositif.

Les dépassements d'un conducteur de véhicule sont facteurs d'accidents. Par exemple, en France, une statistique montre que 2,3% des accidents de véhiculé arrivent sur le réseau routier secondaire au cours de manoeuvres de dépassement.

De manière générale, les constructeurs de véhicule, et en particulier les constructeurs automobiles cherchent à développer des procédés et dispositifs pour informer le conducteur sur la dangerosité de certains dépassements, notamment sur des voies de circulation à deux fois une voie.

Le document FR-A1-2 847 703 divulgue un procédé d'assistance permettant d'informer en permanence le conducteur de la présence d'une section protégée.

On a par exemple déjà proposé des systèmes de navigation comprenant une base de données cartographiques et un système de positionnement par satellitte embarqué dans le véhicule pour positionner celui-ci sur la base de données cartographiques, les procédés mis en oeuvre avec ces systèmes de navigation consistant à prévenir le conducteur lonqu'il se situe dans une zone où il ne peut pas dépasser.

Ce type de procédé présente cependant plusieurs inconvénients.

En effet, si ce procédé assiste le conducteur en lui indiquant s'il se trouve dans une zone où il ne peut pas dépasser, ce procédé n'indique pour autant pas s'il se situe dans une zone où il peut dépasser sans aucun danger.

Par exemple, si le conducteur se situe dans une zone où l'assistance ne lui indique pas qu'il ne peut pas dépasser, le procédé connu n'indique pas pour autant le flux de véhicules qu'il croise sur l'autre voie, source de danger pour son dépassement,

En d'autres termes, les systèmes et procédés connus proposent des interdictions de dépassement, mais en aucun cas des recommandations de dépassement, dans des sections parfaitement sûres : elles ne sont donc pas optimales en termes de sécurité.

Pourtant, sur la plupart des routes secondaires, il existe des sections de dépassement protégées, formées de deux voies dans le même sens de circulation, permettant une zone de dépassement

Un objectif de l'invention est donc d'améliorer les procédés existants, en proposant un procédé d'assistance à la conduite incitant le conducteur à effectuer ses dépassements dans ces sections protégées.

Un autre objectif est également de proposer un dispositif pour mettre en oeuvre ce procédé.

Pour atteindre ces objectifs, il est prévu dans le cadre de l'invention un procédé d'assistance à la conduite d'un véhicule dont le parcours est guidé sur le réseau routier par un système de navigation, dans lequel on informe un conducteur du véhicule de la présence sur son parcours d'une section de route, dite section protégée, réservée pour le dépassement d'un autre véhicule et caractérisé en ce que :
- on détermine la vitesse moyenne Vₘ, du véhicule sur une période de temps prédéterminée, on compare cette vitesse moyenne Vₘ, à la vitesse limite autorisée Vₗᵢₘ, et si la vitesse moyenne Vₘ, est inférieure à la vitesse limite autorisée Vₗᵢₘ, et diffère de celle-ci d'au moins une valeur seuil ΔVₛ prédéterminée, on informe le conducteur de la présence de la section protégée sur son parcours.

Le Procédé selon l'invention pourra en outre présenter au moins l'une des caractéristiques suivantes :
- on détermine la distance actuelle entre le véhicule et la section protégée ; et on informe le conducteur sur la distance le séparant de la section protégée ;
- on détermine la distance actuelle entre le véhicule et la section protégée, on calcule le temps actuel séparant le véhicule de la section protégée, connaissant par ailleurs la vitesse actuelle du véhicule, et on informe le conducteur sur le temps actuel le séparant de la section protégée ;
- on détermine l'état du trafic routier sur le parcours du véhicule, et on informe le conducteur sur le temps estimé le séparant de la section protégée ;
- on compare la vitesse actuelle du véhicule avec la vitesse limite autorisée, le cas échéant, on informe le conducteur qu'il dépasse la vitesse limite autorisés ;
- on informe le conducteur qu'il se situe dans une zone accidentogène ;
- on transmet l'information au conducteur soit par voie sonore, soit par voie visuelle, soit par voies sonore et visuelle.

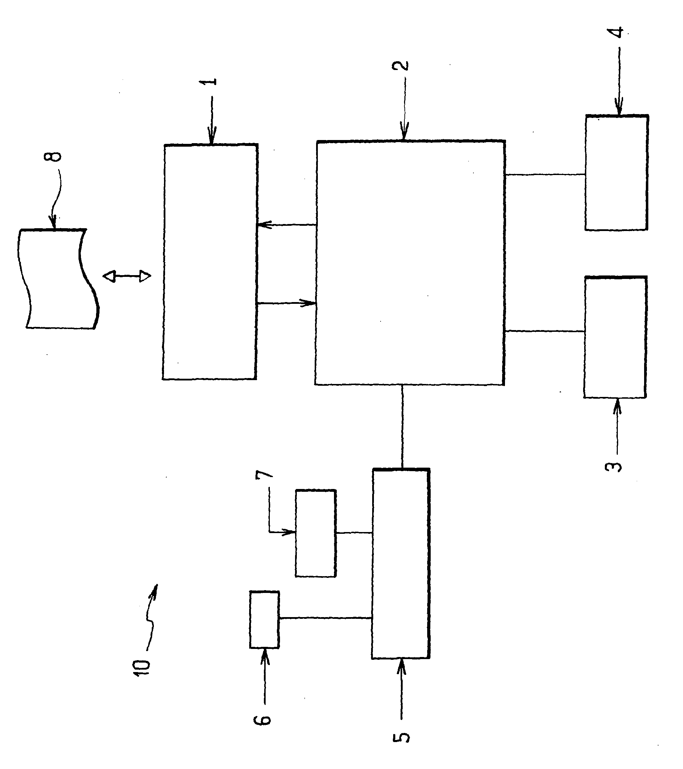

Pour atteindre ces objectifs, il est également prévu dans le cadre de l'invention un dispositif d'assistance à la conduite d'un véhicule, formant système de navigation, comprenant un calculateur relié à la fois à une base de données cartographiques et à un système de positionnement par satellite pour localiser le véhicule sur la base de données cartographiques, la base de données cartographiques répertorie les sections de route, dites sections protégées, réservées pour le dépassement d'un autre véhicule, le dispositif étant caractérisé en ce qu'il comprend des moyens pour :
- déterminer la vitesse moyenne Vₘ, du véhicule sur une période de temps prédéterminée ;
- comparer cette Vitesse moyenne Vₘ, à la vitesse limite autorisée Vₗᵢₘ, et
- si la vitesse moyenne Vₘ, est inférieure à la vitesse limite autorisée Vₗᵢₘ, et diffère de celle-ci d'au moins une valeur seuil ΔVS prédéterminée, informer le conducteur de la présence de la section protégée sur son parcours. D'autres caractéristiques, buts et avantages de la présente invention apparaîtront à la lecture de la description détaillée qui va suivre, et en regard de la figure annexée, donnée à titre d'exemple non limitatif et sur laquelle :
- la figure unique illustre un schéma fonctionnel d'un dispositif selon l'invention.

La figure unique illustre un dispositif mis en oeuvre dans le cadre de l'invention.

Pour l'essentiel, il comprend un calculateur 2, en liaison avec un système de positionnement par satellite 6 et une base de données cartographiques 3 pour localiser le véhicule sur cette base.

Le dispositif 10 comprend également une interface homme-machine 1 pour permettre à un utilisateur 8 de communiquer avec le dispositif. Cette interface 1 est connectée au calculateur 2 qui peut échanger des informations dans les deux sens avec cette interface 1 (envoi d'ordre de la part de l'utilisateur vers la machine et retour d'informations de la part de la machine).

La liaison entre le calculateur 2 et le système de positionnement par satellite 6 est effectuée par l'intermédiaire d'un boîtier de positionnement 5 qui centralise les données issues du système de positionnement par satellite 6 et d'une pluralité de capteurs 7 du véhicule, incluant par exemple un compteur de vitesse du véhicule.

Le calculateur 2 est également de préférence relié à une base de données de sauvegarde 4, utilisable en cas de défaut de la base de données cartographiques 3.

Le dispositif forme ainsi un système de navigation 10, dont l'architecture est en soi connue et ne pose pas de problème d'implémentation pour un homme du métier.

La base de données cartographiques 3 est cependant spécifique et comprend les sections du réseau routier réservées pour le dépassement d'un autre véhicule. Ces sections sont appelées par la suite sections « protégées » ou sections de dépassement protégé.

Par zone de dépassement protégé, on entend une zone parfaitement sûre pour le dépassement d'un autre véhicule, c'est-à-dire pour laquelle un conducteur en cours de dépassement ne peut en aucun cas rencontrer un véhicule circulant en sens inverse. C'est le cas des sections de route à 2*2 voies de circulation comprenant une barrière de sécurité séparant les deux sens de circulation. C'est encore le cas de sections de route formée d'une première voie de circulation dans un sens et de deux autres voies de circulation dans l'autre sens, la première voie étant séparée des deux autres par une ligne blanche ou de préférence une barrière de sécurité.

La base de données intégrera en particulier les sections protégées du réseau secondaire (routes nationales et départementales par exemple).

Bien entendu, cette carte peut porter sur une région spécifique, sur un pays (France par exemple), ou encore pour un ensemble de pays (Europe par exemple) pour lequel le véhicule est destiné. La longueur et de préférence également la nature de ces sections protégées sont intégrées dans la base de données.

Par ailleurs, on comprend que le fait de signaler au conducteur l'existence d'une section protégée sur son parcours n'est possible qu'à partir du moment où le dispositif (système de navigation) guide le parcours du véhicule, autrement dit si le conducteur a entré dans le dispositif une destination à atteindre, et pour laquelle le dispositif détermine un chemin.

Sans cela, on comprend que le dispositif ne peut pas prévoir la route que suit le conducteur, et qu'il ne peut en conséquence l'informer d'une zone de dépassement protégée à venir sur le parcours du véhicule.

Le dispositif de l'invention peut alerter le conducteur selon une pluralité de paramètres configurables.

Nous citons ci-dessous les paramètres les plus importants, mais on comprendra que cela ne limite en rien la portée de l'invention.

Ainsi, il est possible de déterminer la distance actuelle entre le véhicule et la section protégée à venir, par l'intermédiaire du calculateur 2, du fait que la position du véhicule est connue par le système de positionnement par satellite 6 d'une part et la position de la prochaine section protégée sur le parcours du véhicule est connue par la base 3.

Il est également possible de déterminer le temps actuel séparant le véhicule de la section protégée, toujours par l'intermédiaire du calculateur 2, connaissant la distance actuelle grâce aux moyens mentionnés ci-dessus et la vitesse du véhicule (par exemple par le compteur de vitesse 7), puis d'informer le conducteur de ce temps actuel le séparant de la section protégée.

Il est également possible de déterminer l'état du trafic routier sur le parcours du véhicule, et d'informer en conséquence le conducteur sur le temps estimé le séparant de la prochaine section protégée située sur son parcours.

Il est encore possible de déterminer la vitesse moyenne Vₘ du véhicule sur une période de temps prédéterminée, par exemple de quelques dizaines de secondes à quelques minutes, et de la comparer à la vitesse limite Vₗᵢₘ autorisée sur la portion de route sur laquelle se situe le véhicule. Cette vitesse limite Vₗᵢₘ est incluse dans la base de données cartographiques 3.

Avec ces données, on peut par exemple envisager que si la vitesse moyenne Vₘ du véhicule est inférieure à la vitesse limite autorisée Vₗᵢₘ et diffère en outre de celle-ci d'au moins une valeur seuil ΔVₛ prédéterminée, on informe le conducteur de la présence de la section protégée, avec une information portant sur sa distance ou le temps nécessaire à l'atteindre.

Par exemple, si le véhicule roule à une vitesse moyenne déterminée à 55km/h tandis que la vitesse limite autorisée est de 90km/h, et que la valeur seuil prédéterminée a été configurée à ΔVₛ = 25km/h, alors on informe le conducteur de la présence d'une section protégée sur son parcours.

Cela signifie que si le véhicule roule à une vitesse faible par rapport à la vitesse limite autorisée, alors le système considère que l'intention de dépassement du conducteur est élevée et qu'il faut l'informer sur la présence d'une zone de dépassement protégée, pour l'inciter à dépasser dans cette zone.

Bien entendu, on peut tout à fait prévoir dans un cas limite que ΔVₛ = 0, et informer le conducteur de la même façon.

De manière complémentaire, il est également possible d'informer le conducteur d'une zone accidentogène sur son parcours.

Le conducteur peut être informé par des alertes visuelle, sonore ou par une combinaison des deux.

L'alerte visuelle peut prendre la forme d'une fenêtre/texte dans l'écran de navigation du véhicule, c'est-à-dire au sein de l'interface homme-machine 1, ou un pictogramme/ voyant sur le tableau de bord, ou encore un pictogramme rétro projeté sur le pare-brise.

L'alerte sonore peut être un signal bref ou un message vocal utilisant les ressources du dispositif de l'invention, message du type « prochaine zone de dépassement dans un kilomètre ».

On comprend que l'invention est très avantageuse en termes de sécurité, car elle permet d'informer le conducteur sur la présence prochaine d'une zone de dépassement protégée sur son itinéraire, ce qui l'incite à adopter une conduite plus sûre par le report de son intention de dépassement.

## Revendications

1. Procédé d'assistance à la conduite d'un véhicule dont le parcours est guidé sur le réseau routier par un système de navigation (10), dans lequel on informe un conducteur du véhicule de la présence sur son parcours d'une section de route, dite section protégée, réservée pour le dépassement d'un autre véhicule et **caractérisé en ce que** :
- on détermine la vitesse moyenne Vₘ du véhicule sur une période de temps prédéterminée ;
- on compare cette vitesse moyenne Vₘ à la vitesse limite autorisée Vₗᵢₘ ; et
- si la vitesse moyenne Vₘ est inférieure à la vitesse limite autorisée Vₗᵢₘ et diffère de celle-ci d'au moins une valeur seuil ΔVₛ prédéterminée, on informe le conducteur de la présence de la section protégée sur son parcours.

2. Procédé selon la revendication 1, **caractérisé en ce que** :
- on détermine la distance actuelle entre le véhicule et la section protégée ;
- on informe le conducteur sur la distance le séparant de la section protégée.

3. Procédé selon l'une des revendications précédentes, **caractérisé en ce que** :
- on détermine la distance actuelle entre le véhicule et la section protégée ;
- on calcule le temps actuel séparant le véhicule de la section protégée, connaissant par ailleurs la vitesse actuelle du véhicule ;
- on informe le conducteur sur le temps actuel le séparant de la section protégée.

4. Procédé selon l'une des revendications précédentes, **caractérisé en ce que** :
- on détermine l'état du trafic routier sur le parcours du véhicule ;
- on informe le conducteur sur le temps estimé le séparant de la section protégée.

5. Procédé selon l'une des revendications précédentes, **caractérisé en ce que** :
- on compare la vitesse actuelle du véhicule avec la vitesse limite autorisée ;
- le cas échéant, on informe le conducteur qu'il dépasse la vitesse limite autorisée.

6. Procédé selon l'une des revendications précédentes, **caractérisé en ce qu'**on informe le conducteur qu'il se situe dans une zone accidentogène.

7. Procédé selon l'une des revendications précédentes, **caractérisé en ce qu'**on transmet l'information au conducteur soit par voie sonore, soit par voie visuelle, soit par voies sonore et visuelle.

8. Dispositif d'assistance à la conduite d'un véhicule, formant système de navigation (10), comprenant un calculateur (2) relié à la fois à une base de données cartographiques (3) et à un système de positionnement par satellite (6) pour localiser le véhicule sur la base de données cartographiques (3), la base de données cartographiques (3) répertoriant les sections de route, dites sections protégées, réservées pour le dépassement d'un autre véhicule, le dispositif étant **caractérisé en ce qu'**il comprend des moyens pour :
- déterminer la vitesse moyenne Vₘ du véhicule sur une période de temps prédéterminée ;
- comparer cette vitesse moyenne Vₘ à la vitesse limite autorisée Vₗᵢₘ ; et
- si la vitesse moyenne Vₘ est inférieure à la vitesse limite autorisée Vₗᵢₘ et diffère de celle-ci d'au moins une valeur seuil ΔVₛ prédéterminée, informer le conducteur de la présence de la section protégée sur son parcours.

9. Véhicule, en particulier véhicule automobile, **caractérisé en ce qu'**il comprend un dispositif selon la revendication précédente.

## Claims

1. Method for assisting the driving of a vehicle, the journey of which is guided on the road network by a navigation system (10), in which a driver of the vehicle is informed of the presence on his journey of a road section, called protected section, reserved for the overtaking of another vehicle and **characterized in that**:
- the average speed Vₘ of the vehicle is determined over a predetermined time period;
- this average speed Vₘ is compared to the authorized speed limit Vₗᵢₘ; and
- if the average speed Vₘ is below the authorized speed limit Vₗᵢₘ and differs from the latter by at least a predetermined threshold value ΔVₛ, the driver is informed of the presence of the protected section on his journey.

2. Method according to Claim 1, **characterized in that**:
- the current distance between the vehicle and the protected section is determined;
- the driver is informed of the distance separating him from the protected section.

3. Method according to one of the preceding claims, **characterized in that**:
- the current distance between the vehicle and the protected section is determined;
- the current time separating the vehicle from the protected section is calculated, also knowing the current speed of the vehicle;
- the driver is informed of the current time separating him from the protected section.

4. Method according to one of the preceding claims, **characterized in that**:
- the state of the road traffic on the journey of the vehicle is determined;
- the driver is informed of the estimated time separating him from the protected section.

5. Method according to one of the preceding claims, **characterized in that**:
- the current speed of the vehicle is compared with the authorized speed limit;
- if necessary, the driver is informed that he is exceeding the authorized speed limit.

6. Method according to one of the preceding claims, **characterized in that** the driver is informed that he is located in an accident-prone area.

7. Method according to one of the preceding claims, **characterized in that** the information is transmitted to the driver audibly, or visually, or audibly and visually.

8. Device for assisting in the driving of a vehicle, forming a navigation system (10), comprising a computer (2) connected both to a map database (3) and a satellite positioning system (6) to locate the vehicle on the basis of map data (3), the map database (3) itemizing the road sections, called protected sections, reserved for the overtaking of another vehicle, the device being **characterized in that** it comprises means for:
- determining the average speed Vₘ of the vehicle over a predetermined time period;
- comparing this average speed Vₘ to the authorized speed limit Vₗᵢₘ; and
- if the average speed Vₘ is below the authorized speed limit Vₗᵢₘ and differs from the latter by at least a predetermined threshold value ΔVₛ, the driver is informed of the presence of the protected section on his journey.

9. Vehicle, in particular a motor vehicle, **characterized in that** it comprises a device according to the preceding claim.

## Patentansprüche

1. Fahrassistenzverfahren für ein Fahrzeug, dessen Fahrroute im Straßennetz von einem Navigationssystem (10) geführt wird, bei dem der Fahrer des Fahrzeugs über das Vorhandensein, auf seiner Fahrroute, eines Streckenabschnitts, geschützter Abschnitt genannt, informiert wird, der für das Überholen eines anderen Fahrzeugs reserviert ist, und **dadurch gekennzeichnet, dass**
- die mittlere Geschwindigkeit Vₘ des Fahrzeugs über einen vorbestimmten Zeitraum bestimmt wird;
- diese mittlere Geschwindigkeit Vₘ mit der erlaubten Höchstgeschwindigkeit Vₗᵢₘ verglichen wird; und
- wenn die mittlere Geschwindigkeit Vₘ niedriger ist als die erlaubte Höchstgeschwindigkeit Vₗᵢₘ und sich von dieser um mindestens einen vorbestimmten Schwellwert ΔVₛ unterscheidet, der Fahrer über das Vorhandensein des geschützten Abschnitts auf seiner Fahrroute informiert wird.

2. Verfahren nach Anspruch 1, **dadurch gekennzeichnet, dass**:
- die aktuelle Entfernung zwischen dem Fahrzeug und dem geschützten Abschnitt bestimmt wird;
- der Fahrer über die ihn vom geschützten Abschnitt trennende Entfernung informiert wird.

3. Verfahren nach einem der vorhergehenden Ansprüche, **dadurch gekennzeichnet, dass**:
- die aktuelle Entfernung zwischen dem Fahrzeug und dem geschützten Abschnitt bestimmt wird;
- die aktuelle Zeit berechnet wird, die das Fahrzeug vom geschützten Abschnitt trennt, wobei außerdem die aktuelle Geschwindigkeit des Fahrzeugs bekannt ist;
- der Fahrer über die aktuelle Zeit informiert wird, die ihn vom geschützten Abschnitt trennt.

4. Verfahren nach einem der vorhergehenden Ansprüche, **dadurch gekennzeichnet, dass**:
- der Straßenverkehrszustand auf der Fahrroute des Fahrzeugs bestimmt wird;
- der Fahrer über die geschätzte Zeit informiert wird, die ihn vom geschützten Abschnitt trennt.

5. Verfahren nach einem der vorhergehenden Ansprüche, **dadurch gekennzeichnet, dass**:
- die aktuelle Geschwindigkeit des Fahrzeugs mit der erlaubten Höchstgeschwindigkeit verglichen wird;
- gegebenenfalls der Fahrer darüber informiert wird, dass er die erlaubte Höchstgeschwindigkeit überschreitet.

6. Verfahren nach einem der vorhergehenden Ansprüche, **dadurch gekennzeichnet, dass** der Fahrer darüber informiert wird, dass er sich in einer unfallträchtigen Zone befindet.

7. Verfahren nach einem der vorhergehenden Ansprüche, **dadurch gekennzeichnet, dass** die Information entweder akustisch oder visuell, oder akustisch und visuell an den Fahrer übertragen wird.

8. Fahrassistenzvorrichtung für ein Fahrzeug, die ein Navigationssystem (10) bildet, mit einem Rechner (2), der gleichzeitig mit einer kartographischen Datenbank (3) und mit einem Satellitenortungssystem (6) verbunden ist, um das Fahrzeug in der kartographischen Datenbank (3) zu lokalisieren, wobei die kartographische Datenbank (3) die Streckenabschnitte, geschützte Abschnitte genannt, die für das Überholen eines anderen Fahrzeugs reserviert sind, registriert, wobei die Vorrichtung **dadurch gekennzeichnet ist, dass** sie Einrichtungen enthält, um:
- die mittlere Geschwindigkeit Vₘ des Fahrzeugs über einen vorbestimmten Zeitraum zu bestimmen;
- diese mittlere Geschwindigkeit Vₘ mit der erlaubten Höchstgeschwindigkeit Vₗᵢₘ zu vergleichen; und
- wenn die mittlere Geschwindigkeit Vₘ niedriger als die erlaubte Höchstgeschwindigkeit Vₗᵢₘ ist und sich von dieser um mindestens einen vorbestimmten Schwellwert ΔVₛ unterscheidet, den Fahrer über das Vorhandensein des geschützten Abschnitts auf seiner Fahrroute zu informieren.

9. Fahrzeug, insbesondere Kraftfahrzeug, **dadurch gekennzeichnet, dass** es eine Vorrichtung gemäß dem vorhergehenden Anspruch enthält.
